# EUROPEAN PATENT APPLICATION

(11) **EP 2 801 425 A1**
(43) Date of publication of application: **12.11.2014**
(21) Application number: 12864484.6
(22) Date of filing: 01.11.2012
(51) Int. Cl.: B22F 3/11, B22F 7/04, C22C 1/08

(54) **METHOD FOR MANUFACTURING POROUS ALUMINUM**

(30) Priority: 06.01.2012 JP 2012000986
(71) Applicant: UACJ Corporation, Tokyo 100-0004 (JP)
(72) Inventor: TANAKA Yuichi, Tokyo 101-8970 (JP); KOJIMA Yoichi, Tokyo 101-8970 (JP); HONKAWA Yukiou, Tokyo 101-8970 (JP)
(74) Representative: Baumgärtel, Gunnar
(86) International application number: PCT/JP2012/078351
(87) International publication number: WO 2013/103043

(57) **Abstract**

A method for manufacturing porous aluminum, comprising steps of: press-molding a powder mixture of aluminum powder and supporting powder under pressure of not lower than 200 MPa, the aluminum powder having a volume ratio of 5 to 30 % with respect to a total volume of the powder mixture; sintering a press-molded body with heat treatment in an inert atmosphere within a temperature range of not lower than a melting point of the aluminum powder and lower than 700 °C; and removing the supporting powder from a sintered body. With this method, the porous aluminum having a high porosity and a uniform pore diameter, which is suitable for a current collector in a lithium-ion secondary battery and for a variety of filters, is readily manufactured.

## Description

### Technical Field

The present invention relates to a method for manufacturing porous aluminum having a high porosity and a uniform pore diameter, which is suitable as materials for a current collector in a lithium-ion secondary battery, a variety of filters, a catalyst carrier, a heat exchanger, a sound absorbent, and so on.

### Background Art

As methods for manufacturing a porous metal, there are known several methods, such as, a molten-metal foaming method having the steps of mixing a foaming agent, e.g., titanium hydride into a molten metal, and solidifying the mixed molten metal in a state containing generated gas (Patent Document 1), and a spacer method having the steps of mixing metal powder and a spacer material, e.g., sodium chloride, compression-molding the mixed materials, and electrically heating the metal powder to thereby remove the spacer material (Patent Document 2).

### List of Prior-Art Documents

### Patent Documents

Patent Document 1: JP H11-302765 A
Patent Document 2: JP 2004-156092 A

### Summary of the Invention

### Problems to be Solved by the Invention

The molten-metal foaming method is disadvantageous in that the foaming agent is expensive. In addition, because an obtained porous body is of closed cell type, it is not suitable for a current collector in which an active material is to be filled, and for a filter that is required to be permeable to fluids. The known spacer method of sintering the metal powder by utilizing the electric heating is disadvantageous in that the size of the sintered body is limited because of the need of a large current, so that a practical porous metal is difficult to manufacture.

### Means for Solving the Problems

As a result of conducting intensive studies in view of the above-mentioned problems, the inventors have accomplished the present invention by finding a method that is able to readily manufacture a porous metal with a high porosity by properly selecting respective particle diameters and volume ratios of aluminum powder and supporting powder both used in the spacer method, and further controlling press-molding conditions and heat-treatment conditions.

In more detail, according to the present invention of Claim 1, there is provided a method for manufacturing porous aluminum, comprising the steps of: press-molding a powder mixture of aluminum powder and supporting powder under pressure of not lower than 200 MPa, the aluminum powder having a volume ratio of 5 to 30 % with respect to a total volume of the powder mixture; sintering a press-molded body with heat treatment in an inert atmosphere within a temperature range of not lower than a melting point of the aluminum powder and lower than 700 °C; and removing the supporting powder from a sintered body.

The present invention according to Claim 2 provides that, in the press-molding step, the powder mixture in claim 1 may be press-molded in a composite state combined with a metal plate or metal plates under pressure of not lower than 200 MPa; that in the sintering step, the thus obtained press-molded body is sintered with heat treatment in an inert atmosphere within a temperature range of not lower than a melting point of the aluminum powder and lower than 700 °C; and that in the removing step, the supporting powder is removed from the thus obtained sintered body.

The present invention according to Claim 3, provides that in Claim 1 or 2, given that a particle diameter and a volume of the aluminum powder are denoted respectively by dal and Val, and that a particle diameter and a volume of the supporting powder are denoted respectively by ds and Vs, a coverage area percentage C of a surface of the supporting powder covered with the aluminum powder, expressed by C = {(Val × ds) / (4Vs × dal)} × 100, is not less than 70 %.

The present invention according to Claim 4 provides that, in any one of Claims 1 to 3, the supporting powder is made of sodium chloride, potassium chloride, or a mixture of the formers.

The present invention according to Claim 5 provides that, in any one of Claims 1 or 4, the aluminum powder contains at least one of pure aluminum powder and aluminum alloy powder.

The present invention according to Claim 6 provides that, in Claim 5, the aluminum powder contains additive element powder.

### Advantageous Effects of the Invention

With the present invention, the aluminum powders are positively contacted with each other by properly adjusting respective particle diameters and volume ratio of the aluminum powder and the supporting powder, and oxide films on aluminum powder surfaces are destroyed to make fresh aluminum powder surfaces exposed by applying sufficient pressure on the aluminum powders. Furthermore, the aluminum powders can be firmly bonded to each other by heat-treating the powder mixture of the aluminum powder and the supporting powder in an inert atmosphere within a temperature range of not lower than the melting point of the aluminum powder and lower than 700 °C. As a result, open-cell type porous aluminum having a high porosity can be obtained. Moreover, the strength of the porous aluminum can be increased by combining the powder mixture of the aluminum powder and the supporting powder with a metal plate or metal plates in a composite state. The strength of the porous aluminum can also be increased by adding, as aluminum powder materials, aluminum alloy powder and additive element powder to form the alloyed aluminum, or by further mixing an intermetallic compound of aluminum and another metal. Porous aluminum having no substantial limitations in size is obtained with the above-described manufacturing method.

### Brief Description of the Drawings

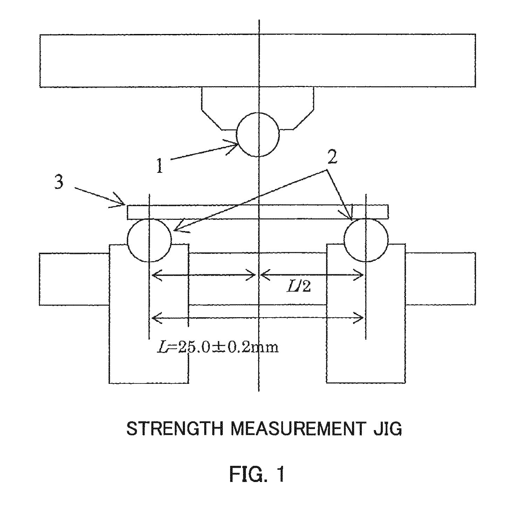

Fig. 1 is a front view of a strength measurement jig used to measure load sustainability.

### Mode for Carrying out the Invention

### (a) Porous Aluminum

Porous aluminum manufactured in accordance with the present invention is obtained by press-molding a powder mixture of aluminum powder and supporting powder that are mixed at a predetermined volume ratio, sintering a press-molded body with heat treatment in an inert atmosphere, and finally removing the supporting powder. The mixed powder may be combined with a metal plate in a composite state. The porous aluminum is constituted by open holes formed after the supporting powder has been removed, and binder metal powder walls of the sintered aluminum powders which surround the open holes. Many fine pores are formed in the binder metal powder walls. The porous aluminum has an open-cell type structure in which the open holes are interconnected through the fine pores of the binder metal powder walls.

### (b) Aluminum Powder

Aluminum powder used in the present invention is pure aluminum powder, aluminum alloy powder, or a mixture of those powders. When an alloy component causes degradation of corrosion resistance in usage environment, the pure aluminum powder is preferably used. The term "pure aluminum powder" implies aluminum with a purity of not less than 99.0 mass%.

On the other hand, when it is desired to obtain higher strength, the aluminum alloy powder or the mixture of the aluminum alloy powder and the pure aluminum powder is preferably used. Any of 1000-, 2000-, 3000-, 4000-, 5000-, 6000-, and 7000-series aluminum alloys is used for the aluminum alloy powder.

The particle diameter of the aluminum powder is preferably 1 to 50 µm. Because the particle diameter of the aluminum powder is desirable to be as small as possible from the viewpoint of fully covering surfaces of the supporting powders with the aluminum powders in the manufacturing of the porous aluminum, it is more preferably 1 to 10 µm. The particle diameter of the aluminum powder is defined in terms of median diameter that is measured by the laser diffraction scattering method (Microtrac method).

### (c) Additive Element Powder

The aluminum powder may be prepared as a mixture of the pure aluminum powder and powder of an additive element added to the former. Such an additive element is preferably one or plural elements in optional combinations of two or more selected from among magnesium, silicon, titanium, iron, nickel, copper, and zinc. The above-mentioned mixture forms an alloy of aluminum and the additive element through heat treatment. An intermetallic compound of aluminum and the additive element is further formed depending on the type of the additive element. Various advantageous effects are obtained with the porous aluminum when the porous aluminum contains the above-mentioned alloy and intermetallic compound of aluminum. In the case of the aluminum alloy containing the additive element, e.g., silicon or copper, and aluminum, the melting point of the aluminum powder lowers, whereby the temperature required for the heat treatment can be reduced. It is hence possible to save energy required for the manufacturing the porous aluminum, and increase the strength of the porous aluminum by alloying aluminum. In another case of forming an intermetallic compound of aluminum and the additive element, e.g., nickel, sintering is promoted with heat generated during the formation of the intermetallic compound, and a structure containing the intermetallic compound dispersed therein is formed, so that the strength of the porous aluminum is increased.

Furthermore, the aluminum powder may be prepared by adding additive element powder to aluminum alloy powder, or by adding additive element powder to a mixture of aluminum alloy powder and pure aluminum powder. In those cases, a new alloy system or a new intermetallic compound is formed. The additive element powder may be additive element alloy powder in which plural types of additive element powders are alloyed.

An amount by which the additive element powder or the additive element alloy powder is added to the aluminum alloy powder or the pure aluminum powder is determined depending on the chemical formula weight of the formed alloy or the formed intermetallic compound.

The particle diameter of the additive element powder is preferably 1 to 50 µm. The particle diameter of the additive element powder is desired to be as small as possible from the viewpoint of realizing sufficient mixing with the pure aluminum powder, the aluminum alloy powder, and the supporting powder. The additive element powder used here has a particle diameter smaller than that of at least the supporting powder. As in the case of the aluminum powder, the particle diameter of the additive element powder is defined in terms of median diameter that is measured by the laser diffraction scattering method (Microtrac method).

### (d) Supporting Powder

The supporting powder used in the present invention is prepared as powder that will not react with the aluminum powder during a process from mixing to removal of the supporting powder, and that can be readily removed through dissolution or decomposition from a body to be processed, which is obtained in a step after formation of the press-molded body. Materials used for the supporting powder having the above-mentioned properties include inorganic salts, such as sodium chloride, ammonium chloride, calcium chloride, magnesium chloride, aluminum chloride, potassium chloride, nickel chloride, zinc chloride, ammonium bicarbonate, sodium hydrogenphosphate, sodium dihydrogenphosphate, potassium dihydrogenphosphate, potassium hydrogenphosphate, potassium hydrogenphosphite, potassium phosphate, magnesium sulfate, potassium sulfate, and halides of alkaline earth metals; crystalline carbohydrates grouped into mono-, di- and tri- saccharides, such as sucrose and lactose; and organic macromolecular compounds, such as polyvinyl alcohol, polyethylene oxide, polypropylene wax, and carboxymethylcellulose sodium. Among those examples, water-soluble inorganic salts are preferable. In particular, sodium chloride and potassium chloride are preferable from the viewpoint of easiness in availability and handling. Because spaces formed after removing the supporting powders become open holes of the porous aluminum, the particle diameter of the supporting powder influences the pore diameter. Therefore, the particle diameter of the supporting powder used in the present invention is preferably 10 to 1000 µm. The particle diameter of the supporting powder is defined depending on the mesh size of a sieve. Thus, the porous aluminum having a uniform pore diameter can be obtained by making the particle diameters of the supporting powders uniform through sizing.

### (e) Metal Plate

In the present invention, the powder mixture may be used in a composite state with a metal plate. Examples of the metal plate include a non-pored plate or foil; and mesh-like members, such as a pored metal mesh, an expanded metal, and a punched metal. The metal plate serves as a supporting member, thereby increasing the strength and electrical conductivity of the porous aluminum. The metal plate is preferably made of a material that is not evaporated or decomposed during the heat treatment, specifically a metal, such as aluminum, titanium, iron, nickel, copper, or SUS, or an alloy thereof. In particular, when the porous aluminum is applied to electrodes of lithium-ion batteries, etc., aluminum or SUS is preferably used.

Composite state of the powder mixture and the metal plate implies, when a metal mesh is used as the metal plate, for example, an integrated state resulting from filling the powder mixture into mesh openings and covering the entirety of the metal mesh with the powder mixture. In the case of filling, for example, a catalyst or an active substance into the porous aluminum which has the binder metal powder walls and is disposed on each side of a metal plate, when the metal plate is a perforated mesh-like member, it is possible to fill the catalyst or the active substance from the porous aluminum on one side of the metal plate to the porous aluminum on the other side of the metal plate. Accordingly, the metal plate is preferably the perforated mesh-like member. Here, the term "perforated" implies mesh openings of the metal mesh, punched holes of the punched metal, mesh openings of the expanded metal, and gaps between fibers of metal fibers.

The opening diameter of the mesh-like member is allowed to be larger or smaller than the diameter of open holes obtained by removing the supporting powder from the bonded powder mixture.

The opening rate of the openings in the mesh-like member is preferably as large as possible in order not to reduce the porosity of the porous aluminum.

### (f) Mixing Method

Assuming that respective volumes of the aluminum powder and the supporting powder are denoted by Val and Vs, a mixing ratio of the aluminum powder and the supporting powder is set such that a volume rate of the aluminum powder, expressed by Val/(Val + Vs), is 5 to 30 % and preferably 5 to 25 %. Here, the volumes Val and Vs are values calculated from weight and specific gravity for the aluminum powder and the supporting powder, respectively. If the volume rate of the aluminum powder is more than 30 %, the content of the supporting powder would be too small, and the supporting powders would be isolated without contacting with each other. Thus, the supporting powder could not be fully removed. The supporting powder remaining without being removed would cause corrosion of the porous aluminum. On the other hand, the volume rate of the aluminum powder is less than 5 %, the walls constituting the porous aluminum would be too thin, and the strength of the porous aluminum would be insufficient. Thus, it would be difficult to handle the porous aluminum, and to sustain the shape of the porous aluminum.

Furthermore, to achieve the state where the supporting powder is fully covered with the aluminum powder, the particle diameter of the aluminum powder is required to be sufficiently smaller than that of the supporting powder (when using dal and ds described below, dal/ds is preferably not more than 0.1).

Assuming that the particle diameters of the aluminum powder and the supporting powder are denoted by dal and ds, respectively, a coverage area percentage C (%), expressed by C = {(Val × ds) / (4Vs × dal)} × 100, of the surface of the supporting powder covered with the aluminum powder is preferably not less than 70 % and more preferably not less than 100 % and not more than 4000 %. Respective values of dal, ds, Val and Vs are selected so as to satisfy the above-mentioned condition.

The percent area coverage C is calculated as follows. It is assumed that the aluminum powder and the supporting powder are singularly dispersed spheres having the particle sizes dal and ds, respectively, in terms of diameter. On that condition, the maximum cross-sectional area of the aluminum powder is Aal = (π/4)dal², and the surface area of the supporting powder is As = πds². The number of the aluminum powders and the number of the supporting powders are expressed by nal = (Val) / {(4/3π) × (dal/2)³} = {6 (Val)} / {π(dal)³} and ns = (Vs) / {(4/3π) × (ds/2)³} = {6 (Vs)} / {π(ds)³}, respectively. Thus, the percent area coverage of the supporting powder occupied by the aluminum powder is approximately expressed by C = {(Aal × nal) / (As × ns)} × 100 = {(Val × ds) / (4Vs × dal)} × 100. It is to be noted that the aluminum powder does not include the additive element powder when the percent area coverage C is calculated.

For example, when the size of open holes in a portion of the binder metal powder walls of the porous aluminum to be manufactured and the porosity thereof are decided, an upper limit value of the particle diameter of usable aluminum powder can be determined by utilizing the above-mentioned formula. In other words, when ds, Vs and Val are decided, the upper limit value of the particle diameter of usable aluminum powder can be determined from dal ≤ {(Val × ds) / (4Vs)} × {100/70} by determining dal such that C is not less than 70 %. If C = {(Val × ds) / (4Vs × dal)} × 100 is less than 70 %, the supporting powder would not be sufficiently covered with the aluminum powder and connection between the aluminum powders would be more apt to be cut in the press-molded state. During the heat treatment, therefore, the aluminum powders would not be interconnected by a liquid-phase of the aluminum powders, and binding between the aluminum powders would hardly occur. Hence the frequency of binding between the aluminum powders would be reduced, thus resulting in a possibility of reduction in the strength of the porous aluminum and destruction of the binder metal powder walls in the step of removing the supporting powder. Accordingly, C is preferably set to be not less than 70 %.

When C is not less than 70 % and less than 100 %, the binding frequency between the aluminum powders tends to reduce though being not so large extent as in the case of C being less than 70 %. Moreover, if C is more than 4000 %, the supporting powder would be more apt to remain in the porous aluminum. For example, when sodium chloride is used as the supporting powder, there is a possibility that the remaining sodium chloride may cause corrosion of the porous aluminum. Accordingly, C is more preferably set to be 100 to 4000 %.

A vibration stirrer, a vessel-rotary mixer or the like is used as a means for mixing aluminum with the supporting powder. However, the mixing means is not limited to particular one insofar as a sufficiently mixed state is obtained.

### (g) Combining Method

A method for combining the powder mixture and the metal plate is practiced by combining them into a composite state when the powder mixture is filled into shaping dies. In the composite state, the metal plate may be sandwiched between the powder mixtures, or the powder mixture may be sandwiched between the metal plates. Furthermore, the powder mixture and the metal plate may be repeatedly combined into a multistage composite. The composite state may be obtained by employing powder mixtures of the aluminum powder and the supporting powder which have different particle diameters or which are mixed at different mixing ratios, or which are combined with a plurality of different types of metal plates.

### (h) Press-Molding Method

Pressure during the press-molding is required to be not lower than 200 MPa. By executing the press-molding under application of sufficient pressure, the aluminum powders are forced to rub against each other, and firm oxide films on the aluminum powder surfaces which impede sintering between the aluminum powders are destroyed. The oxide film encloses the molten aluminum and impedes contact between the molten aluminums. Furthermore, the oxide film is inferior in wettability with the molten aluminum, and acts to expel the liquid-state aluminum. Accordingly, if the pressure during the press-molding is lower than 200 MPa, the oxide film on the aluminum powder surface would be insufficiently destroyed, and the aluminum having been molten during the heating would seep out from the molded body and form ball-shaped aluminum lumps. The porosity of the porous aluminum would be fairly increased from the desired value with the formation of the aluminum aggregate, and the strength of the porous aluminum would be reduced with outflow of the molten aluminum. Thus, the formation of the aluminum lumps is disadvantageous in that the porosity of the porous aluminum becomes out of control. Another problem is that the shape of the porous aluminum becomes deformed with the formation of the aluminum lumps, and the aluminum lumps have to be removed. Because the porous aluminum has stronger walls when formed under higher molding pressure, it is preferable to increase the molding pressure as long as the apparatus and the metal mold used permit it. However, if the molding pressure exceeds 400 MPa, the resulting effect would tend to saturate. Additionally, any of lubricants, e.g., aliphatic acids such as stearic acid, metallic soaps such as zinc stearate, various types of waxes, synthetic resins, and olefinic synthetic carbohydrates, is preferably used for the purpose of increasing easiness in release of the press-molded body.

### (i) Heat Treatment Method

The heat treatment is performed at temperature of not lower than the melting point of the aluminum powder used and lower than 700 °C. The melting point of the aluminum powder implies temperature at which a liquid phase of the pure aluminum or the aluminum alloy is generated. When a mixture of plural types of aluminum alloy powders is used, the melting point of the aluminum powder implies the melting point of the aluminum alloy that has the lowest melting point. When the additive element powder is added to the pure aluminum powder, the aluminum alloy powder, or the mixture of both powders, the melting point of the aluminum powder implies, if the aluminum alloy is a series that has a lower melting point by being alloyed with the additive element existing therein during the heat treatment, a temperature at which a liquid phase is generated in the aluminum alloy of the series. For example, in a series of the aluminum alloy that silicon powder is added as the additive element powder to the pure aluminum powder, a eutectic temperature of 577 °C at which a liquid phase is generated in the series is defined as the melting point. As another example, in a series of the aluminum alloy that copper powder is added as the additive element powder to the pure aluminum powder, a eutectic temperature of 548 °C at which a liquid phase is generated in the series is defined as the melting point. By heating the aluminum powder up to temperature at which a liquid phase is generated, the liquid phases are caused to seep out from the aluminum powders and to contact with each other, whereby the aluminum powders are metallically bonded to each other.

If the temperature of the heat treatment is lower than the melting point, the aluminum would not be molten, and bonding between the aluminum powders would be insufficient or bonding between the aluminum powder and the metal plate in the case that both being combined into the composite state would be insufficient. On the other hand, when the temperature becomes higher than the melting point, the aluminum which covers the surface of the supporting powder and is positioned in the outermost surface of the sintered body, is removed, so that the sintered body having a surface with a large open porosity can be formed reliably. The large open porosity of the sintered body is advantageous in filling an active substance into the porous aluminum, for example, when the porous aluminum is applied to a current collector. If the temperature of the heat treatment is lower than the aluminum melting point, it would be difficult to obtain the sintered body having a surface with a large open porosity.

The heat treatment is performed at temperature lower than 700 °C and preferably lower than 680 °C. If the temperature of the heat treatment is not lower than 700 °C, the viscosity of the molten aluminum would be decreased, thereby causing the molten aluminum to seep out from the molded body and form protruding lumps of aluminum. The porosity of the porous aluminum would be fairly increased from the desired value with the formation of the aluminum lumps, and the strength of the porous aluminum would be reduced with outflow of the molten aluminum. Thus, the formation of the aluminum lumps is disadvantageous in that the porosity of the porous aluminum becomes out of control. Another problem is that the shape of the porous aluminum is deformed with the formation of the aluminum lumps, and the deformed portions have to be removed. A heating hold time in the heat treatment is preferably about 1 to 60 minutes. The molded body may be compressed by applying a load to the molded body during the heat treatment. Further, heating and cooling may be repeated plural times.

To suppress oxidation of aluminum, the heat treatment is carried out in an inert. The inert atmosphere is preferably provided as a vacuum atmosphere, or a gas atmosphere using nitrogen, argon, hydrogen, decomposed ammonia, or a gas mixture of them. The vacuum atmosphere is particularly preferable. The vacuum atmosphere implies an atmosphere in which pressure is reduced to a level of preferably not higher than 2 × 10⁻² Pa and more preferably not higher than 1 × 10⁻² Pa. If the pressure is higher than 2 × 10⁻² Pa, moisture adsorbed on the aluminum powder surface would be removed insufficiently, and oxidation of the aluminum surface would be progressed during the heat treatment. Because the oxide film formed on the aluminum surface with the progress of oxidation of the aluminum surface is inferior in wettability with the liquid-state aluminum as described above, the molten aluminum seeps out and forms ball-shaped lumps, thus causing the above-mentioned drawbacks. In the case of the inert gas atmosphere using nitrogen, for example, it is preferable that the oxygen concentration is held not more than 1000 ppm and the dew point is held not higher than -30 °C.

### (j) Method of Removing Supporting Powder

The supporting powder in the sintered body is removed preferably by a method of eluting the supporting powder into water. The supporting powder can be readily eluted by a method of, for example, immersing the sintered body in a water bath or a flowing water bath of sufficient amount. When water-soluble salt is used as the supporting powder, water into which the salt is eluted is preferably deionized water or distilled water, with less impurity. However, tap water may also be used without problems in practice. Usually, an immersion time is appropriately selected from the range of several hours to 24 hours. Elution of the supporting powder can be promoted by vibrating the sintered body in the immersed state with application of ultrasonic waves, for example.

### Examples

The present invention will be described in detail below in connection with Inventive Examples and Comparative Examples. It is to be noted that the present invention is not limited to the following examples.

### (Example 1 <Inventive Examples 1 to 18 and Comparative Examples 1 to 5>)

Pure aluminum powders (A1, A2 and A6) having different particle diameters, an alloy powder (A4), and a mixed powder (A5) prepared by mixing A1 and A4 at a weight ratio of 4 : 1 were used as materials of the aluminum powder. Sodium chloride powders (B1 to B3) having different particle diameters and potassium chloride powder (C1) having a particle diameter of 605 µm were used as materials of the supporting powder. The particle diameters of the individual supporting powders were made uniform by sizing the supporting powders to obtain the particle diameters of medial values of the sieve mesh openings as listed below. Powder mixtures were prepared by mixing the pure aluminum powder and the supporting powder at predetermined volume ratios as listed in Tables 1 and 2. The powder mixtures were each filled into a metal mold having a hole of 12 mm × 30 mm and press-molded under pressures as listed in Tables 1 and 2. A quantity of the filling powder mixture was set to weight at which a molded body with a thickness of 1 mm was obtained. A sintered body was fabricated by heat-treating the molded body under conditions of temperature and time, as listed in Tables 1 and 2, in an atmosphere where maximum reachable pressure was not higher than 1 × 10⁻² Pa. The obtained sintered body was immersed in flowing water (tap water) at 20 °C for 6 hours for elution of the supporting powder. A porous aluminum sample (having width of 12 mm × length of 30 mm × thickness of 1 mm) was thus fabricated.

### [Table 1]

**Table 1**

| | Composition of Powder Mixture | | | Mixing Volume Rate (vol %) | | | C | Melting Point of Aluminum Powder | Press-forming Pressure | Temperature of Heat Treatment | Heating Hold Time | Persistence of Supporting Powder | | External Appearance | Shape Keeping Ability | Load Sustainability | |
|---|---|---|---|---|---|---|---|---|---|---|---|---|---|---|---|---|---|
| | Al | NaCl | KCl | Al | NaCl | KCl | (%) | °C | (MPa) | (°C) | (min) | (%) | Rating | | | (%) | Rating |
| Inventive Ex.1 | A1 | B1 | - | 10 | 90 | - | 560 | 660 | 400 | 670 | 5 | 0.0 | ○ | ○ | ○ | 82 | ○ |
| Inventive Ex.2 | A2 | B2 | - | 10 | 90 | - | 159 | 660 | 400 | 670 | 5 | 0.0 | ○ | ○ | ○ | 65 | ○ |
| Inventive Ex.3 | A1 | B2 | - | 10 | 90 | - | 370 | 660 | 400 | 670 | 5 | 0.0 | ○ | ○ | ○ | 62 | ○ |
| Inventive Ex.4 | A1 | B3 | - | 10 | 90 | - | 111 | 660 | 400 | 670 | 5 | 0.0 | ○ | ○ | ○ | 62 | ○ |
| Inventive Ex.5 | A1 | - | C1 | 10 | - | 90 | 560 | 660 | 400 | 670 | 5 | 0.0 | ○ | ○ | ○ | 82 | ○ |
| Inventive Ex.6 | A2 | B2 | - | 5 | 95 | - | 75 | 660 | 400 | 670 | 5 | 0.0 | ○ | ○ | ○ | 70 | ○ |
| Inventive Ex.7 | A1 | B1 | C1 | 10 | 45 | 45 | 560 | 660 | 400 | 670 | 5 | 0.0 | ○ | ○ | ○ | 79 | ○ |
| Inventive Ex.8 | A1 | B1 | - | 10 | 90 | - | 560 | 660 | 200 | 670 | 5 | 0.0 | ○ | ○ | ○ | 88 | ○ |
| Inventive Ex.9 | A1 | B1 | - | 10 | 90 | - | 560 | 660 | 600 | 670 | 5 | 0.0 | ○ | ○ | ○ | 86 | ○ |
| Inventive Ex.10 | A1 | B1 | - | 10 | 90 | - | 560 | 660 | 700 | 670 | 5 | 0.0 | ○ | ○ | ○ | 87 | ○ |
| Inventive Ex.11 | A1 | B1 | - | 10 | 90 | - | 560 | 660 | 400 | 675 | 1 | 0.0 | ○ | ○ | ○ | 75 | ○ |
| Inventive Ex.12 | A1 | B1 | - | 10 | 90 | - | 560 | 660 | 400 | 665 | 20 | 0.0 | ○ | ○ | ○ | 66 | ○ |
| Inventive Ex.13 | A1 | B1 | - | 20 | 80 | - | 1260 | 660 | 400 | 670 | 5 | 0.0 | ○ | ○ | ○ | 82 | ○ |
| Inventive Ex.14 | A4 | B1 | - | 20 | 80 | - | 111 | 557 | 400 | 570 | 5 | 0.0 | ○ | ○ | ○ | 65 | ○ |
| Inventive Ex.15 | A5 | B2 | - | 10 | 90 | - | 139 | 557 | 400 | 640 | 5 | 0.0 | ○ | ○ | ○ | 79 | ○ |
| Inventive Ex.16 | A6 | B1 | - | 20 | 80 | - | 3781 | 660 | 200 | 670 | 5 | 0.0 | ○ | ○ | ○ | 68 | ○ |
| Inventive Ex.17 | A2 | B2 | - | 10 | 90 | - | 65 | 660 | 400 | 670 | 5 | 0.0 | ○ | ○ | ○ | 52 | Δ |
| Inventive Ex.18 | A6 | B1 | - | 30 | 70 | - | 4286 | 660 | 400 | 670 | 5 | 0.2 | Δ | ○ | ○ | 66 | ○ |

### [Table 2]

**Table 2**

| | Composition of Powder Mixture | | | Mixing Volume Rate (vol %) | | | C | Melting Point of Aluminum Powder | Press-forming Pressure | Temperature of Heat Treatment | Heating Hold Time | Persistence of Supporting Powder | | External Appearance | Shape Keeping Ability | Load Sustainability | |
|---|---|---|---|---|---|---|---|---|---|---|---|---|---|---|---|---|---|
| | Al | NaCl | KCl | Al | NaCl | KCl | (%) | °C | (MPa) | (°C) | (min) | (%) | Rating | | | (%) | Rating |
| Com. Ex.1 | A1 | B1 | - | 35 | 65 | - | 2715 | 660 | 400 | 670 | 5 | 0.5 | × | ○ | ○ | - | - |
| Com. Ex.2 | A1 | B1 | - | 2 | 98 | - | 103 | 660 | 400 | 670 | 5 | 0.0 | ○ | ○ | × | - | - |
| Com. Ex.3 | A1 | B1 | - | 10 | 90 | - | 560 | 660 | 100 | 670 | 5 | 0.0 | ○ | × | ○ | - | - |
| Com. Ex.4 | A1 | B1 | - | 10 | 90 | - | 560 | 660 | 400 | 650 | 5 | 0.0 | ○ | ○ | ○ | 48 | × |
| Com. Ex.5 | A1 | B1 | - | 10 | 90 | - | 560 | 660 | 400 | 700 | 5 | 0.0 | ○ | × | ○ | - | - |

### <Pure Aluminum Powder (Aluminum Purity of not less than 99.7 mass%)

A1: median diameter 3 µm (melting point: 660 °C)
A2: median diameter 7 µm (melting point: 660 °C)
A3: median diameter 17 µm (melting point: 660 °C)
A6: median diameter 1 µm (melting point: 660 °C)

### <Alloy Powder>

A4: Al - 7.5 % Si - 1 % Mg, median diameter 27 µm (melting point: 557 °C)
A5: a mixed powder of A1 (melting point: 660 °C) and A4 (melting point: 557 °C) at weight ratio of 4 : 1, median diameter 8 µm

### <Sodium Chloride Powder>

B1: particle diameter 605 µm (median value of sieve mesh openings) (melting point: 800 °C)
B2: particle diameter 400 µm (median value of sieve mesh openings) (melting point: 800 °C)
B3: particle diameter 120 µm (median value of sieve mesh openings) (melting point: 800 °C)

### <Potassium Chloride Powder>

C1: particle diameter 605 µm (median value of sieve mesh openings) (melting point: 776 °C)

The following points were evaluated for each porous aluminum sample fabricated as described above.

### (Persistence of Supporting Powder)

Respective contents of sodium and potassium in the porous aluminum sample, which were dissolved in hydrochloric acid, were measured by employing ICP-AES (Inductively Coupled Plasma - Atomic Emission Spectrometry). When the supporting powder was made of sodium chloride alone, the sodium content was measured. When the supporting powder was made of potassium chloride alone, the potassium content was measured. When the supporting powder was a mixture of sodium chloride and potassium chloride, the sodium content and the potassium content were measured. In the case of the supporting powder being made of sodium chloride or potassium chloride alone, the sample was rated acceptable (○) when the sodium content or the potassium content was less than 0.1 mass%, fairly acceptable (Δ) when it was not less than 0.1 mass% and less than 0.5 mass%, and unacceptable (×) it was not less than 0.5 mass%. On the other hand, in the case of the mixture, the sample was rated acceptable (○) when a total of the sodium content and the potassium content was less than 0.1 mass%, fairly acceptable (Δ) when it was not less than 0.1 mass% and less than 0.5 mass%, and unacceptable (×) it was not less than 0.5 mass%.

### (External Appearance)

The presence or the absence of seeping-out of the molten aluminum during the heat treatment was evaluated by visual observation. The sample for which the seeping-out was not observed was rated acceptable (○), and the sample for which the seeping-out was observed was rated unacceptable (×).

### (Shape Keeping Ability)

Whether or not the binder metal powder walls were crumbled in the step of removing the supporting powder from the sintered body, was evaluated by visually observing change in shape of the porous aluminum sample. The porous aluminum sample in which the shape was not changed was rated acceptable (○), and the porous aluminum sample in which the shape was changed was rated unacceptable (×).

### (Load Sustainability)

For the porous aluminum sample which has been rated acceptable in the evaluation of the persistence, the external appearance and the shape keeping ability of the supporting powder, load sustainability was examined by employing a strength measuring jig illustrated in Fig. 1. As illustrated in Fig. 1, a loading roller 1 was pressed from above against a porous aluminum sample 3 which was placed on a pair of supporting rollers 2 and 2 (with a roller-to-roller length L = 25.0 ± 0.2 mm), and a load was measured when the loading roller 1 was descended at a constant speed. Generally, in a frangible sample, a load is abruptly reduced after reaching a maximum value. In view of such a property, the sample was rated acceptable (○) when the load measured at timing after the loading roller 1 was further descended by 2 mm from a point having reached a maximum load was not less than 60 % of the maximum load, fairly acceptable (Δ) when it was not less than 50 % and less than 60 %, and unacceptable (×) when it was less than 50 %. The descending speed of the loading roller 1 was set to 1 mm/min.

The rating results were listed in Tables 1 and 2. As seen from Tables 1 and 2, Inventive Examples 1 to 18 were all rated acceptable.

As seen from Table 2, in Comparative Example 1, because the volume rate of the aluminum powder was too large, a part of the sodium chloride (supporting powder) was isolated, and the isolated supporting powder could not be brought into contact with water. Therefore, the persistence of the supporting powder was unacceptable.

In Comparative Example 2, because the volume rate of the aluminum powder was too small, the binder metal powder walls of the porous aluminum became thin and were collapsed. Therefore, the shape keeping ability was unacceptable.

In Comparative Example 3, because the press-forming pressure was too low, the fresh surface of the aluminum powder was exposed insufficiently, and the molten aluminum seeped out during the heat treatment. Therefore, the external appearance was unacceptable.

In Comparative Example 4, because the temperature of the heat treatment was too low, the sintering was not sufficiently progressed, and the load sustainability was unacceptable.

In Comparative Example 5, because the temperature of the heat treatment was too high, the molten aluminum seeped out, and the external appearance was unacceptable.

### (Example 2 <Inventive Examples 19 to 22 and Comparative Examples 6 to 10>)

The above-mentioned A1 to A3 were used as materials of the aluminum powder, and B2 was used as the supporting powder. A precision expanded metal (4AL8-4/0) made by TAIYO WIRE CLOTH CO., LTD. was used as the metal plate. Powder mixtures were prepared by mixing the pure aluminum powder and the supporting powder at predetermined volume ratios listed in Tables 3 and 4. In Inventive Examples 19 and 21, the powder mixtures were each filled into a metal mold having a hole of 12 mm × 30 mm, and the metal plate was arranged to be positioned at a center of the powder mixture in the direction of thickness thereof such that the powder mixture and the metal plate were combined into a composite state. On the other hand, in Inventive Examples 20 and 22, only the powder mixture was filled without arranging the precision expanded metal. The press-molding was then performed under pressures listed in Tables 3 and 4. An amount of the filled powder mixture was set to weight at which a press-molded body with a thickness of 1 mm was obtained. A sintered body was fabricated by heat-treating the press-molded body under conditions of temperature and time, listed in Tables 3 and 4, in a low-pressure atmosphere where maximum reachable pressure was not higher than 1 × 10⁻² Pa. The obtained sintered body was immersed in flowing water (tap water) at 20 °C for 6 hours for elution of the supporting powder. A porous aluminum sample (having width of 12 mm × length of 30 mm × thickness of 1 mm) was thus fabricated.

The porous aluminum samples fabricated as described above were evaluated on the evaluation items picked up in Example 1, and a maximum load was measured for the samples which were rated as acceptable in respect of all the evaluation items in Example 1. The evaluation results are listed in Tables 3 and 4. Evaluation items

### [Table 3]

**Table 3**

| | Composition of Powder Mixture | | | Mixing Volume Rate (vol %) | | | C | Melting Point of Aluminum Powder | Press-forming Pressure | Temperature of Heat Treatment | Heating Hold Time | Persistence of Supporting Powder | | External Appearance | Shape Keeping Ability | Maximum Load | Load Sustainability | |
|---|---|---|---|---|---|---|---|---|---|---|---|---|---|---|---|---|---|---|
| | Al | NaCl | KCl | Al | NaCl | KCl | (%) | °C | (MPa) | (°C) | (min) | (%) | Rating | | | (N) | (%) | Rating |
| Inventive Ex.19 | A1 | B2 | - | 5 | 95 | - | 175 | 660 | 400 | 670 | 5 | 0.0 | ○ | ○ | ○ | 0.11 | 93 | ○ |
| Inventive Ex.20 | A1 | B2 | - | 5 | 95 | - | 175 | 660 | 400 | 670 | 5 | 0.0 | ○ | ○ | ○ | 0.06 | 67 | ○ |
| Inventive Ex.21 | A3 | B2 | - | 20 | 80 | - | 147 | 660 | 400 | 670 | 5 | 0.0 | ○ | ○ | ○ | 1.42 | 84 | ○ |
| Inventive Ex.22 | A3 | B2 | - | 20 | 80 | - | 147 | 660 | 400 | 670 | 5 | 0.0 | ○ | ○ | ○ | 1.01 | 63 | ○ |

[Table 4]

**Table 4**

| | Composition of Powder Mixture | | | Mixing Volume Rate (vol %) | | | C | Melting Point of Aluminum Powder | Press-forming Pressure | Temperature of Heat Treatment | Heating Hold Time | Persistence of Supporting Powder | | Externa l Appearance | Shape Keeping Ability | Maximum Load | Load Sustainability | |
|---|---|---|---|---|---|---|---|---|---|---|---|---|---|---|---|---|---|---|
| | Al | NaCl | KCl | Al | NaCl | KCl | (%) | °C | (MPa) | (°C) | (min) | (%) | Rating | | | (N) | (%) | Rating |
| Com. Ex.6 | A1 | B2 | - | 2 | 98 | - | 68 | 660 | 400 | 670 | 5 | 0.0 | ○ | ○ | × | - | - | - |
| Com. Ex.7 | A2 | B2 | - | 35 | 65 | - | 769 | 660 | 400 | 670 | 5 | 0.6 | × | ○ | ○ | - | - | - |
| Com. Ex.8 | A1 | B2 | - | 10 | 90 | - | 370 | 660 | 100 | 670 | 5 | 0.0 | ○ | × | ○ | - | - | - |
| Com. Ex.9 | A1 | B2 | - | 10 | 90 | - | 370 | 660 | 400 | 700 | 5 | 0.0 | ○ | × | ○ | - | - | - |
| Com. Ex.10 | A1 | B2 | - | 10 | 90 | | 65 | 660 | 400 | 630 | 5 | 0.0 | ○ | ○ | ○ | - | - | × |

As seen from Table 3, Inventive Examples 19 to 22 were rated acceptable regarding all the evaluation items. In Inventive Examples 19 and 21, the strength was improved in comparison with Inventive Examples 20 and 22 in which the expanded metal was not combined.

As seen from Table 4, in Comparative Example 6, because the volume rate of the aluminum powder was too small, there were many portions where connection between the aluminum powders was cut, and thus the shape keeping ability was unacceptable.

In Comparative Example 7, because the volume rate of the aluminum powder was too large, a part of the sodium chloride (supporting powder) was isolated, and the isolated supporting powder could not be brought into contact with water. Therefore, the persistence of the supporting powder was unacceptable.

In Comparative Example 8, because the press-forming pressure was too low, the fresh surface of the aluminum powder was exposed insufficiently, and the molten aluminum seeped out during the heat treatment. Therefore, the external appearance was unacceptable.

In Comparative Example 9, because the temperature of the heat treatment was too high, the molten aluminum seeped out, and the external appearance was unacceptable.

In Comparative Example 10, because the temperature of the heat treatment was lower than the melting points of the aluminum powder and the expanded metal, the sintering was not progressed, and the sample split at a portion where the expanded metal was inserted during the measurement of the maximum load. Thus, the load measurement could not be completed.

(Example 3 <Inventive Examples 23 to 26 and Comparative Examples 11 to 15>)

The above-mentioned A1, A2, A4 and A5 were used as materials of the aluminum powder, B1 and B2 were used as materials of the supporting powder, and D1 and D2, given below, were used as materials of the additive element powder. Powder mixtures were prepared by mixing those powders as listed in Tables 5 and 6. The powder mixtures were each filled into a metal mold having a hole of 12 mm × 30 mm, and press-molded under pressures listed in Tables 5 and 6. A quantity of the filled powder mixture was set to weight at which a molded body with a thickness of 1 mm was obtained. A sintered body was fabricated by heat-treating the molded body under conditions of temperature and time, listed in Tables 5 and 6, in an atmosphere where maximum reachable pressure was not higher than 1 × 10⁻² Pa. The obtained sintered body was immersed in flowing water (tap water) at 20 °C for 6 hours for elution of the supporting powder. A porous aluminum sample (having width of 12 mm × length of 30 mm × thickness of 1 mm) was thus fabricated.

### [Table 5]

**Table 5**

| | Composition of Powder Mixture | | | Mixing Volume Rate (vol %) | | | C | Melting Point of Aluminum Powder | Press-forming Pressure | Temperature of Heat Treatment | Heating Hold Time | Persistence of Supporting Powder | | Externa l Appearance | Shape Keeping Ability | Load Sustainability | |
|---|---|---|---|---|---|---|---|---|---|---|---|---|---|---|---|---|---|
| | Al | NaCl | Additive Element Powder | Al | NaCl | Additive Element Powder | (%) | °C | (MPa) | (°C) | (min) | (%) | Rating | | | (%) | Rating |
| Inventive Ex.23 | A1 | B1 | D1 | 9.8 | 90.0 | 0.2 | 549 | 577 | 400 | 640 | 5 | 0.0 | ○ | ○ | ○ | 83 | ○ |
| Inventive Ex.24 | A1 | B1 | D2 | 19.6 | 80.0 | 0.4 | 1235 | 548 | 400 | 650 | 5 | 0.0 | ○ | ○ | ○ | 86 | ○ |
| Inventive Ex.25 | A4 | B1 | D1 | 19.6 | 80.0 | 0.4 | 137 | 557 | 400 | 600 | 5 | 0.0 | ○ | ○ | ○ | 67 | ○ |
| Inventive Ex.26 | A5 | B1 | D1 | 9.8 | 90.0 | 0.2 | 206 | 557 | 400 | 620 | 5 | 0.0 | ○ | ○ | ○ | 82 | ○ |

[Table 6]

**Table 6**

| | Composition of Powder Mixture | | | Mixing Volume Rate (vol %) | | | C | Melting Point of Aluminum Powder | Press-forming Pressure | Temperature of Heat Treatment | Heating Hold Time | Persistence of Supporting Powder | | External Appearance | Shape Keeping Ability | Load Sustainability | |
|---|---|---|---|---|---|---|---|---|---|---|---|---|---|---|---|---|---|
| | Al | NaCl | Additive Element Powder | Al | NaCl | Additive Element Powder | (%) | °C | (MPa) | (°C) | (min) | (%) | Rating | | | (%) | Rating |
| Com. Ex.11 | A1 | B1 | D1 | 1.8 | 90.0 | 8.2 | 67 | 577 | 400 | 670 | 5 | 0.0 | ○ | ○ | × | - | - |
| Com. Ex.12 | A2 | B2 | D1 | 34.4 | 70.0 | 0.6 | 702 | 577 | 400 | 640 | 5 | 0.5 | × | ○ | ○ | - | - |
| Com. Ex.13 | A1 | B1 | D1 | 9.8 | 90.0 | 0.2 | 549 | 577 | 100 | 640 | 5 | 0.0 | ○ | × | ○ | - | - |
| Com. Ex.14 | A1 | B1 | D1 | 9.8 | 90.0 | 0.2 | 549 | 577 | 400 | 700 | 5 | 0.0 | ○ | × | ○ | - | - |
| Com. Ex.15 | A1 | B2 | D1 | 9.8 | 90.0 | 0.2 | 363 | 577 | 400 | 560 | 5 | 0.0 | ○ | ○ | ○ | 15 | × |

### <Additive Element Powder>

D1: silicon, median diameter 5 µm
D2: copper, median diameter 5 µm

The porous aluminum samples fabricated as described above were evaluated on the same evaluation items as Example 1. The evaluation results are listed in Tables 5 and 6.

As seen from Table 5, Inventive Examples 23 to 26 were rated acceptable regarding all the evaluation items.

As seen from Table 6, in Comparative Example 11, because the volume rate of the aluminum powder was too small, there were many portions where connection between the aluminum powders was cut, and the shape keeping ability was unacceptable.

In Comparative Example 12, because the volume rate of the aluminum powder was too large, a part of the sodium chloride (supporting powder) was isolated, and the isolated supporting powder could not be brought into contact with water. Therefore, the persistence of the supporting powder was unacceptable.

In Comparative Example 13, because the press-forming pressure was too low, the fresh surface of the aluminum powder was exposed insufficiently, and the molten aluminum seeped out during the heat treatment. Therefore, the external appearance was unacceptable.

In Comparative Example 14, because the temperature of the heat treatment was too high, the molten aluminum seeped out, and the external appearance was unacceptable.

In Comparative Example 15, because the temperature of the heat treatment was lower than the eutectic temperature of aluminum and silicon, the sintering was not progressed, and the load sustainability was unacceptable.

### Industrial Applicability

The present invention can provide porous aluminum having a high porosity and a uniform pore diameter, which is suitable as materials for a current collector in a lithium-ion secondary battery, a variety of filters, a catalyst carrier, a heat exchanger, a sound absorbent, and so on. Furthermore, the present invention can manufacture porous aluminum that has basically no limitations on size.

### List of Reference Symbols

1 .. loading roller
2 .. supporting roller
3 .. porous aluminum sample
L .. length between supporting rollers

## Claims

1. A method for manufacturing porous aluminum, comprising the steps of:
press-molding a powder mixture of aluminum powder and supporting powder under pressure of not lower than 200 MPa, the aluminum powder having a volume ratio of 5 to 30 % with respect to a total volume of the powder mixture;
sintering a molded body with heat treatment in an inert atmosphere within a temperature range of not lower than a melting point of the aluminum powder and lower than 700 °C; and
removing the supporting powder from a sintered body.

2. The method for manufacturing porous aluminum according to Claim 1 wherein in the press-molding step, the powder mixture in claim 1 is press-molded in a composite state combined with a metal plate or metal plates under pressure of not lower than 200 MPa,
wherein in the sintering step, the thus obtained press-molded body is sintered with heat treatment in an inert atmosphere within a temperature range of not lower than a melting point of the aluminum powder and lower than 700 °C, and
wherein in the removing step, the supporting powder is removed from a the thus obtained sintered body.

3. The method for manufacturing porous aluminum according to Claim 1 or 2, wherein given that a particle diameter and a volume of the aluminum powder are denoted respectively by dal and Val, and that a particle diameter and a volume of the supporting powder are denoted respectively by ds and Vs, a coverage area percentage C of a surface of the supporting powder covered with the aluminum powder, expressed by C = {(Val × ds) / (4Vs × dal)} × 100, is not less than 70 %.

4. The method for manufacturing porous aluminum according to any one of Claims 1 to 3, wherein the supporting powder is made of sodium chloride, potassium chloride, or a mixture of the sodium chloride and the potassium chloride.

5. The method for manufacturing porous aluminum according to any one of Claims 1 to 4, wherein the aluminum powder contains at least one of pure aluminum powder and aluminum alloy powder.

6. The method for manufacturing porous aluminum according to Claim 5, wherein the aluminum powder contains additive element powder.
